(19) Europäisches Patentamt / European Patent Office / Office européen des brevets

(11) **EP 2 189 810 B1**

(12) **FASCICULE DE BREVET EUROPEEN**

(45) Date de publication et mention de la délivrance du brevet:
**28.08.2013 Bulletin 2013/35**

(51) Int Cl.:
*G01S 13/90* *(2006.01)*

(21) Numéro de dépôt: **09176043.9**

(22) Date de dépôt: **16.11.2009**

(54) **Dispositif de radar pour la surveillance maritime**

Radarsystem zur Meeresüberwachung

Radar system for maritime surveillance

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.11.2008 FR 0806549**

(43) Date de publication de la demande:
**26.05.2010 Bulletin 2010/21**

(73) Titulaire: **Thales**
**92200 Neuilly Sur Seine (FR)**

(72) Inventeur: **Richard, Jacques**
**31200 Toulouse (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-00/08483    WO-A1-2007/057707**

- **FREEMAN A ET AL: "The Myth of the Minimum SAR Antenna Area Constraint" IEEE TRANSACTIONS ON GEOSCIENCE AND REMOTE SENSING, IEEE SERVICE CENTER, PISCATAWAY, NJ, US, vol. 38, no. 1, 1 janvier 2000 (2000-01-01), XP011021428 ISSN: 0196-2892**
- **CIRO CAFFORIO ET AL: "Doppler Centroid Estimation for ScanSAR Data" IEEE TRANSACTIONS ON GEOSCIENCE AND REMOTE SENSING, IEEE SERVICE CENTER, PISCATAWAY, NJ, US, vol. 42, no. 1, 1 janvier 2004 (2004-01-01), pages 14-23, XP007909279 ISSN: 0196-2892**
- **ANONYMOUS: "RADARSAT-1 Technical Specifications Summary" CANADA CENTRE FOR REMOTE SENSING - SPACEBORNE SYNTHETIC APERTURE RADAR (RADARSAT), [Online] 21 janvier 2008 (2008-01-21), XP002538491 [extrait le 2009-07-22]**
- **STIMSON G ED - STIMSON ET AL: "SAR Design Considerations", 1 January 1998 (1998-01-01), INTRODUCTION TO AIRBORNE RADAR, MENDHAM, NJ : SCITECH PUBL, US, PAGE(S) 425 - 426, XP007919230, ISBN: 978-1-891121-01-2 * page 425 - page 426 ***
- **TIKKINEN J M ET AL: "Joint utilization of incoherently and coherently integrated radar signal in helicopter categorization", RADAR CONFERENCE, 2005 IEEE INTERNATIONAL ARLINGTON, VA, USA 9-12 MAY 2005, PISCATAWAY, NJ, USA,IEEE, 9 May 2005 (2005-05-09), pages 540-545, XP010801758, ISBN: 978-0-7803-8881-9**

EP 2 189 810 B1

**Description**

La présente invention concerne un dispositif de radar pour la surveillance maritime, destiné à être embarqué sur un vecteur se déplaçant à très haute altitude, c'est-à-dire généralement sur un satellite. Par radar de surveillance maritime, on désigne un radar dont la mission est d'établir une carte de situation des objets, ou « cibles », qui naviguent à la surface de surfaces d'eau de la Terre.

Plus précisément, l'invention vise à l'amélioration des dispositifs de radar à synthèse d'ouverture, connus sous l'appellation de SAR pour Synthetic Aperture Radar selon l'acronyme anglais, en vue de favoriser la détection de « cibles » navigant à la surface des mers et des océans.

Pour mener à bien la mission consistant à réaliser la détection de « cibles », un radar doit présenter une résolution spatiale sensiblement décamétrique. Par ailleurs, la mission de surveillance maritime induit la nécessité d'une couverture radar importante, étant donnée l'immensité des surfaces à observer. Les concepts radars actuels ne permettent pas de concilier ces deux aspects.

Dans un souci de clarté, on va maintenant définir certains termes techniques du domaine de l'invention. Dans la suite, notamment dans la description et dans les revendications, on entend :

- par probabilité de détection : la probabilité statistique qu'un radar détecte la présence d'une cible effectivement présente, dans un environnement bruité ;
- par probabilité de fausse alarme : la probabilité statistique qu'un radar détecte la présence d'une cible qui n'est pas effectivement présente, dans un environnement bruité ;
- par résolution spatiale d'un radar : la plus petite séparation en distance, habituellement exprimée en mètres, entre deux cibles identiques telle que ledit radar puisse déterminer la présence de deux cibles et non d'une seule ;

  o la résolution azimut est dans ce cadre la résolution spatiale dans la direction azimut ;
  o la résolution distance est quant à elle la résolution spatiale dans la direction distance, orthogonale à la direction azimut ;

- par couverture d'un radar : la zone observée par le radar ;
- par largeur de fauchée d'un radar embarqué sur un vecteur très haute altitude, tel qu'un satellite : la largeur de la zone observée par le radar, dans la direction perpendiculaire à la direction de déplacement du vecteur embarquant le radar.
- par fréquence de répétition : la fréquence de l'émission des impulsions par un radar à impulsions ;
- par écho : le signal renvoyé au radar par les objets illuminés par une impulsion émise par ledit radar ;

- par clutter : mot anglais désignant de façon usuelle un écho non souhaité ; un clutter de mer est par conséquent l'écho renvoyé par une zone maritime dépourvue de cibles ;
- par cellule de résolution : la surface élémentaire, de sol ou de mer, restituée par le radar après traitement de l'écho.

On notera que la réduction de la taille de la cellule de résolution spatiale rend plus facile la détection de cibles petites, car la puissance du clutter, proportionnelle à la surface de cette cellule, s'en trouve également réduite. En effet, une cible est détectée dès lors qu'elle renvoie un écho de puissance plus élevée que celui d'un clutter, mais les considérations de besoins énergétiques de l'instrument radar associés au besoin de réduire le niveau du bruit thermique capté par le récepteur de l'instrument limitent cette résolution à quelques dizaines de mètres.

Par ailleurs, l'invention concerne le domaine des radars à impulsions, c'est-à-dire des radars qui émettent des impulsions à une certaine fréquence, dite fréquence de répétition, via une antenne émettrice, par exemple vers le sol, et mesurent ensuite l'écho renvoyé par le sol vers une antenne réceptrice dudit radar. Souvent, l'antenne émettrice et l'antenne réceptrice sont une seule et même antenne physique ; on parle alors d'instrument monostatique. En fonctionnement, les impulsions émises, présentant une certaine énergie, illuminent une surface découpée en cellules de résolution ; le radar mesure et traite le signal réfléchi par chacune de ces cellules de cette surface.

Par ailleurs, pour améliorer les performances des radars de surveillance maritime, la nécessité de réduire le nombre d'échos ambigus et leur niveau est connue. L'écho d'une cible donnée se caractérise par son instant de réception et par sa fréquence Doppler résultant du déplacement du satellite. On appelle écho ambigu (ou ambiguïté) un écho parasite correspondant à la réponse d'une zone distincte de la cellule de résolution « utile », directement illuminée par l'impulsion radar censée être à l'origine de l'écho, et se superposant exactement en instant de réception et en fréquence Doppler au signal « utile ». Ces ambiguïtés sont dues au fonctionnement impulsionnel du radar. Il existe deux types d'ambiguïtés : les ambiguïtés dites « distance » correspondent aux échos de zones situées dans la direction normale à la direction de déplacement - lieu des points à Doppler nul - et répondant à des impulsions antérieures ou postérieures. Les ambiguïtés dites « azimut » correspondent aux échos de zones situées à la même distance que la surface « utile » et dont la fréquence Doppler est ambiguë avec la fréquence Doppler de la zone utile - l'émission régulière d'impulsions par le radar rend le spectre Doppler des échos périodique.

Pour la surveillance maritime globale depuis l'espace, les objectifs de performances de l'instrument radar sont de l'ordre de 90 % pour la probabilité de détection et de 10⁻⁷ pour la probabilité de fausse alarme. Ces performances nécessitent typiquement des résolutions spatiales de l'ordre de quelques dizaines de mètres en distance sur quelques dizaines de mètres en azimut.

Actuellement, pour effectuer des missions de surveillance maritime, on utilise typiquement des radars à visée latérale (ou SLAR pour Side-Looking Aperture Radar selon l'acronyme anglais) à ouverture réelle, généralement embarqués sur des satellites. On peut citer à titre d'exemple les satellites russes RORSAT opérationnels de 1965 à 1988. Ces radars à visée latérale sont considérés comme particulièrement bien adaptés à l'observation de vastes étendues. Ils comprennent une ou des antennes orientées sur la gauche ou sur la droite du chemin suivi par leurs satellites porteurs, de façon perpendiculaire à leur direction de déplacement. Ces antennes émettent et / ou reçoivent avec des faisceaux dont l'ouverture en élévation est liée à la largeur de fauchée du radar. Pour que la couverture du radar soit la plus importante possible, on choisit une largeur de fauchée très grande, typiquement de 1000 kilomètres. Pour que les d'ambiguïtés en distance soient atténuées par le diagramme d'antenne du radar, celui-ci se caractérise par une fréquence de répétition faible, de l'ordre de 100 hertz, pour une fauchée de 1000 kilomètres. Sa résolution spatiale est bien de quelques dizaines de mètres en distance mais de plusieurs kilomètres en azimut, car la résolution azimut est déterminée par l'empreinte du faisceau d'antenne au sol en azimut, soit typiquement 5,5 kilomètres pour un satellite évoluant à 600 kilomètres, un radar travaillant en bande X, à 9,6 gigahertz, et utilisant une antenne de 10 mètres de longueur pointée vers une zone à 70° d'incidence. On rappelle que l'on appelle incidence l'angle formé par la verticale locale au radar et la direction d'arrivée du signal radar émis.

Une telle résolution spatiale ne permet pas d'obtenir des performances de détection satisfaisantes sur des cibles de taille décamétrique.

D'un autre côté, dans l'état de l'art, on trouve les radars à synthèse d'ouverture, dont la particularité est d'appliquer un traitement numérique de synthèse d'ouverture en azimut, permettant de simuler une antenne de très grande longueur en enregistrant et en intégrant de façon cohérente les échos reçus pour plusieurs positions successives de l'antenne du radar. La résolution azimut étant inversement proportionnelle à la longueur de l'antenne synthétisée, il est possible avec ce type de radar d'obtenir une résolution spatiale métrique, pouvant théoriquement atteindre la moitié de la longueur de l'antenne en résolution azimut dans la direction de déplacement, soit 5 mètres pour une antenne d'une dizaine de mètres.

Cependant, les radars à synthèses d'ouverture actuels sur un satellite en orbite basse présentent une fréquence de répétition relativement élevée, classiquement de l'ordre de 1500 hertz avec une antenne d'une dizaine de mètres pour répondre au besoin de bonne qualité d'image. En effet, dans le but d'éloigner les ambiguïtés azimut dans les lobes secondaires du diagramme d'antenne azimut, et de façon à permettre l'intégration du traitement numérique de synthèse d'ouverture, usuellement appelé traitement SAR, les impulsions radars doivent être rapprochées.

En conséquence, de tels radars à synthèse d'ouverture présentent généralement une largeur de fauchée de l'ordre de 100 kilomètres pour satisfaire également le rejet des ambiguïtés distance, très inférieure aux 1000 kilomètres souhaités en vue de mener efficacement des missions de surveillance maritime.

Des radars connus sont décrits dans Freeman et Al. : « The Myth of the Minimum SAR Antenna Area Constraint », IEEE Transactions on geoscience and remote sensing, XP011021428 et dans la demande de brevet internationale WO 2007/057707 A1 publiée le 24 mai 2007.

« The Myth of the Minimum SAR Antenna Area Constraint » décrit un radar SAR.

WO 2007/057707 A1 divulgue également un radar SAR pour la surveillance maritime, faisant varier la fréquence de répétition pour essayer d'étaler les ambiguïtés en vue de réduire leur niveau maximal. Néanmoins, l'inconvénient essentiel de l'objet décrit dans WO 2007/057707 A1 réside dans le fait qu'en fin du traitement une seule observation d'une cible est disponible et que le concept est par conséquent insatisfaisant en termes de probabilité de détection de cibles petites.

Ces radars de l'état de la technique ne permettent pas de bénéficier simultanément d'une résolution spatiale décamétrique et d'une largeur de fauchée importante, de l'ordre de 1000 km. Le dispositif radar selon l'invention résout cette difficulté et permet d'assurer une surveillance maritime de qualité, garantissant de bonnes performances en termes de probabilité de détection de cibles et de capacité de traitement de vastes étendues maritimes.

A cet effet, l'invention a pour objet un dispositif de radar à synthèse d'ouverture partielle destiné à la surveillance maritime et destiné à être embarqué sur un vecteur se déplaçant à très haute altitude, et présentant une résolution spatiale sensiblement décamétrique, caractéristique des radars à synthèse d'ouverture, et une largeur de fauchée, caractérisé en ce qu'il présente une fréquence de répétition faible, telle que ladite largeur de fauchée et ladite fréquence de répétition vérifient la relation $c \approx 2 \cdot F \cdot Fr \cdot \sin(inc)$, où c est la vitesse de propagation des ondes radio, F est la largeur de fauchée, Fr est la fréquence de répétition et inc est l'incidence d'un signal émis par ledit dispositif de radar, de sorte que la largeur de fauchée est élevée, typiquement de l'ordre 1000 km, et en ce qu'il comprend des moyens pour intégrer de manière cohérente et de manière incohérente une pluralité d'images d'une même zone, de manière à améliorer la probabilité de détection de cibles de petite taille dans ladite zone.

Avantageusement, la fréquence de répétition est de l'ordre de la centaine de hertz.

Avantageusement, la résolution spatiale est sensiblement égale à quelques dizaines mètres en distance sur quelques dizaines mètres en azimut.

Dans un exemple de mise en oeuvre de l'invention, la résolution spatiale est sensiblement égale à 25 mètres en distance sur 25 mètres en azimut. Dans ce contexte, la largeur de fauchée peut par ailleurs être sensiblement égale à 1000 kilomètres, l'incidence sensiblement égale à 70° et la fréquence de répétition sensiblement égale à 100 hertz.

Avantageusement, le dispositif de radar selon l'invention comprenant une antenne réceptrice, ladite antenne réceptrice peut comporter un faisceau d'ouverture en réception très fin en élévation par rapport à l'ouverture du faisceau à l'émission, typiquement d'un rapport supérieur ou égale à environ cinq, ainsi que des moyens d'orientation dynamique dudit faisceau d'ouverture en réception vers la direction d'arrivée de l'écho, de manière à augmenter le gain en réception dudit dispositif de radar à synthèse d'ouverture selon l'invention.

Avantageusement, les moyens d'orientation dynamique du faisceau d'ouverture en réception comprennent des moyens de balayage électronique en réception, permettant de suivre la direction d'arrivée de l'écho.

Généralement, le vecteur se déplaçant à très haute altitude est un satellite.

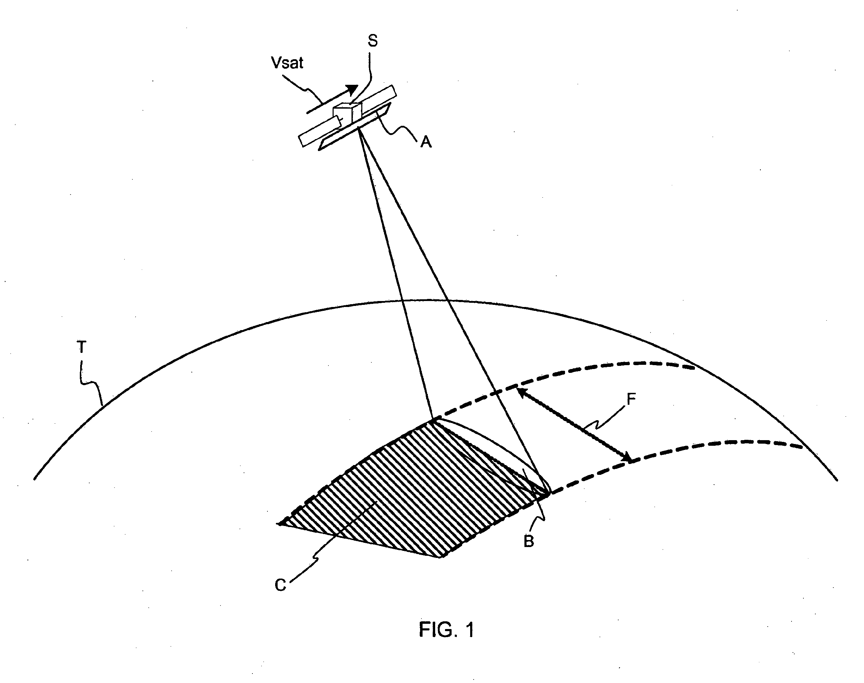

D'autres caractéristiques et avantages de l'invention apparaîtront à l'aide de la description qui suit faite en regard de la figure 1 annexée qui représente le schéma présentant le principe de fonctionnement d'un radar à visée latérale à ouverture réelle ou à synthèse d'ouverture.

La figure 1 représente un satellite radar à impulsions S de surveillance maritime, se déplaçant dans la direction Vsat. Ce schéma permet d'expliciter de manière simplifiée le fonctionnement d'un tel satellite radar S, pouvant être à visée latérale à ouverture réelle ou à synthèse d'ouverture, ledit principe de fonctionnement étant sensiblement le même dans le dispositif selon l'invention que dans des dispositifs de l'état de la technique. Cependant, dans le cadre de la mise en oeuvre de l'invention, il ne pourrait s'agir que d'un satellite radar à synthèse d'ouverture présentant des caractéristiques particulières.

La plupart des satellites d'observation radar de la terre T, comme le satellite S, sont des satellites radar à visée latérale, c'est-à-dire qu'ils comprennent une antenne A pointant sur le côté du satellite S, avec un faisceau qui, par rapport à la direction de déplacement Vsat du satellite S, est large orthogonalement à la direction Vsat et étroit dans le sens de la direction Vsat. Le radar embarqué sur le satellite S émet à un instant donné une impulsion dont l'empreinte au sol est représentée sur la figure par l'empreinte du faisceau d'antenne B. Cette empreinte du faisceau d'antenne B présente une largeur qui correspond à la largeur de fauchée F. Ladite impulsion est réfléchie par la terre, la mer, et les éventuelles cibles à leur surface, et l'analyse de la puissance réfléchie reçue par le satellite va permettre d'imager la zone correspondant à l'empreinte du faisceau d'antenne B. A l'impulsion suivante, le satellite radar S a effectué un déplacement élémentaire et une nouvelle zone illuminée par l'antenne A du satellite radar S est imagée. Au fur et à mesure, on peut donc imager une zone correspondant à la couverture C du radar embarqué sur le satellite S.

Comme vu précédemment, la fréquence des impulsions est appelée la fréquence de répétition. Dans l'état de la technique, le satellite S, lorsqu'il est à synthèse d'ouverture, présente systématiquement une fréquence de répétition suffisamment élevée, supérieure à la bande Doppler devant être traitée, pour les raisons invoquées plus haut. De façon synthétique, on peut dire que l'éloignement des ambiguïtés dans la direction azimutale exige l'augmentation de la fréquence de répétition du radar tandis que l'éloignement des ambiguïtés dans la direction distance requiert la réduction de cette fréquence de répétition. Ces deux contraintes sont donc contradictoires et nécessitent un compromis sur le choix de la fréquence de répétition. Classiquement, le dimensionnement d'un radar à synthèse d'ouverture trouve son origine dans la taille de l'antenne pouvant être embarquée, typiquement d'une longueur de 10 mètres, et du choix de la fréquence radar. On en déduit la dimension azimut de l'empreinte du faisceau d'antenne B, puis la fréquence de répétition minimale permettant d'éloigner les ambiguïtés azimut ; cette fréquence de répétition ainsi calculée est de l'ordre de 1500 hertz pour une antenne de 10 mètres émettant en bande X et un satellite évoluant en orbite basse. La valeur de cette fréquence de répétition donne l'espacement entre les ambiguïtés distance, qui permet de calculer la largeur de fauchée F maximale puis d'en déduire la hauteur de l'antenne. Pour les valeurs typiques déjà citées, on arrive à une largeur de fauchée F maximale de 100 kilomètres, très inférieure à celle souhaitée de 1000 kilomètres environ. Comme on va le voir par la suite, l'invention remet en cause cet état de fait en proposant un satellite à synthèse d'ouverture particulière et à fréquence de répétition basse, par exemple de l'ordre de 100 hertz.

En effet, l'idée de base de l'invention vise à déterminer le meilleur compromis possible entre la large couverture radar, rendue nécessaire par le fait que la mission de surveillance maritime implique ipso facto l'observation de vastes étendues, et la résolution spatiale décamétrique, indispensable pour obtenir des performances de probabilité de détection de cibles satisfaisantes.

Les performances de détection d'une cible, soit un navire à la surface d'un océan, sont définies par le contraste entre la puissance réfléchie par ladite cible et la somme de celle réfléchie par le clutter de mer et du bruit thermique. Ce rapport

$$\left(\frac{P_{Cible}}{P_{Clutter} + B_{Thermique}}\right),$$

où $P_{Cible}$ est la densité de puissance réfléchie par la cible à détecter, $P_{Clutter}$ est la densité de puissance réfléchie par le clutter de mer et $B_{Thermique}$ est le bruit thermique, doit être supérieur à un seuil de détectabilité $S_d$ qui dépend de la probabilité de détection du radar, de la probabilité de fausse alarme, et du nombre d'échos intégrés après détection ; il s'agit de post-intégration. On notera que l'efficacité de la post-intégration nécessite que les échos soient indépendants entre eux, ce qui est obtenu en implémentant une agilité de fréquence au niveau de l'instrument, d'impulsion à impulsion.

Or, la densité de puissance réfléchie par la cible à détecter est proportionnelle à la surface équivalente radar de ladite cible. La surface équivalente radar d'un objet s'exprime en mètres carré et traduit l'importance relative de la surface de réflexion par l'objet considéré du faisceau radar illuminant ledit objet. Cette surface équivalente radar est une caractéristique intrinsèque de toute cible. La densité de puissance réfléchie par le clutter de mer est proportionnelle au produit de la résolution azimut par la résolution distance. Enfin, le bruit thermique est inversement proportionnel au produit du gain de l'antenne A en émission et du gain de l'antenne A en réception.

L'introduction d'une synthèse d'ouverture azimut permet, comme on l'a vu, d'améliorer la résolution azimut, celle-ci pouvant atteindre la moitié de la longueur de l'antenne A. En revanche, le choix d'une faible fréquence de répétition par rapport à la bande Doppler que l'on souhaite traiter, de l'ordre de 100 hertz par exemple, donc très inférieure à la bande Doppler de 1500 hertz de notre exemple, entraîne une augmentation du nombre d'ambiguïtés azimut et dégrade la densité de puissance du clutter de mer. Cependant, le bilan global de ces deux aspects est un gain sur le contraste significatif, puisqu'il peut atteindre 17 décibels avec les valeurs numériques citées précédemment et une résolution azimut égale à la valeur limite correspondant à la moitié de la longueur de l'antenne A. Le gain sur les performances de détection n'est cependant pas dans le même rapport car l'introduction d'un traitement cohérent induit une perte sur le nombre d'impulsions post-intégrées ; aucune post intégration n'est possible si toutes les impulsions reçues sont intégrées de façon cohérente. Il est ainsi avantageux de combiner les deux types de traitement : cohérent et incohérent. Un optimum apparaît entre le nombre d'impulsions intégrées de façon cohérente et le nombre d'impulsions post-intégrées (intégration incohérente).

Pour une intégration cohérente correspondant à une résolution de 25 mètres en azimut, proche de l'optimum du procédé, le gain global de performance de détection est de l'ordre de 6,6 décibels.

Cette amélioration de la détectabilité des cibles navigant à la surfaces des mers rend notamment plus aisée la détection de navires par temps de mer agitée.

Optionnellement, l'invention peut être complétée en intégrant au radar embarqué selon l'invention une technologie connue consistant en l'utilisation, pour l'antenne A en réception, d'un faisceau très fin, et de moyens d'orientation dynamique dudit faisceau vers la direction d'arrivée de l'écho. Ceci permet d'augmenter le gain en réception, et donc de diminuer le bruit thermique et d'améliorer la détectabilité. En effet, la distinction entre le gain de l'antenne A en émission et le gain de l'antenne A en réception permet de s'affranchir, pour ce qui est de la réception, de la contrainte d'illumination de la zone à observer, et donc de l'ouverture du faisceau en élévation. Il est donc possible de générer un faisceau très fin en réception, dès lors qu'on lui adjoint des moyens d'orientation dynamique vers la direction d'arrivée de l'écho. L'axe du faisceau en réception doit en effet suivre la direction d'arrivée des échos de façon déterministe. Afin de permettre leur mise en oeuvre, ces moyens d'orientation dynamique du faisceau en réception peuvent comporter des moyens de balayage électronique.

Cette technologie complète idéalement le dispositif selon l'invention, améliorant ses performances en termes de probabilité de détection.

En résumé, l'invention consiste en un radar embarqué sur un vecteur très haute altitude, tel qu'un satellite, destiné à la surveillance maritime. Son principal avantage est de présenter à la fois une largeur de fauchée importante, typiquement de l'ordre de 1000 kilomètres, et une résolution spatiale décamétrique, typiquement de l'ordre de 25 mètres sur 25 mètres. Parfaitement adapté à la surveillance maritime du fait de sa large couverture radar, le dispositif selon l'invention affiche également une bonne efficacité du point de vue de la probabilité de détection de cibles.

**Revendications**

1. Dispositif de radar à synthèse d'ouverture partielle destiné à la surveillance maritime et destiné à être embarqué sur un vecteur se déplaçant à très haute altitude (S), et présentant

   - une résolution spatiale décamétrique, une largeur de fauchée (F), et une fréquence de répétition (Fr) telles que ladite largeur de fauchée (F) et ladite fréquence de répétition (Fr) vérifient la relation $Fr \approx c\,/[2 \cdot F \cdot \sin(inc)]$ ,où c est la vitesse de propagation des ondes radio, F est la largeur de fauchée, Fr est la fréquence de répétition et inc est l'incidence d'un signal émis par ledit dispositif de radar,
   **caractérisé en ce que**
   - ladite fréquence de répétition (Fr) est comprise entre quelques dizaines et quelques centaines de Hertz, induisant une largeur de fauchée (F) sensiblement égale à 1000 km, ladite fréquence de répétition (Fr) étant très inférieure à la bande Doppler des échos reçus par ledit dispositif radar, ladite fréquence Doppler étant sensiblement égale à 1500 Hz,

- et **en ce qu'**il comprend des moyens pour intégrer une pluralité d'images d'une même zone de manière cohérente combinés avec des moyens pour intégrer après détection les images obtenues de manière incohérente,

- le nombre d'images intégrées après détection étant tel que le rapport entre la densité de puissance réfléchie par la cible (Pcible) et la somme de la puissance réfléchie par les échos non souhaités (Pclutter) et du bruit thermique (Bthermique) soit supérieur à un seuil de détectabilité (Sd) de telle sorte que la probabilité de détection de cibles de taille métrique et décamétrique dans ladite zone est améliorée.

2. Dispositif selon l'une quelconque des revendications précédentes, **caractérisé en ce que** la résolution spatiale est sensiblement égale à quelques dizaines de mètres en distance sur quelques dizaines de mètres en azimut.

3. Dispositif selon l'une quelconque des revendications précédentes, comprenant une antenne réceptrice, **caractérisé en ce que** ladite antenne réceptrice comporte un faisceau d'ouverture en réception très fin en élévation par rapport à l'ouverture du faisceau à l'émission, d'un rapport supérieur ou égal à environ cinq, ainsi que des moyens d'orientation dynamique dudit faisceau d'ouverture en réception vers la direction d'arrivée de l'écho, de manière à augmenter le gain en réception dudit dispositif de radar à synthèse d'ouverture selon l'invention.

4. Dispositif selon la revendication 3, **caractérisé en ce que** les moyens d'orientation dynamique du faisceau d'ouverture en réception comprennent des moyens de balayage électronique en réception, permettant de déterminer la direction d'arrivée de l'écho.

5. Satellite **caractérisé en ce qu'**il comporte un dispositif selon l'une quelconque des revendications précédentes.

**Patentansprüche**

1. Radarvorrichtung mit teilweiser künstlicher Apertur zur Meeresüberwachung, so ausgelegt, dass sie an Bord eines sich in sehr großer Höhe (S) bewegenden Trägers installiert werden kann, die Folgendes umfasst:

- eine dekametrische Raumauflösung, eine Schwadbreite (F) und eine Wiederholfrequenz (Fr), wobei die Schwadbreite (F) und die Wiederholfrequenz (Fr) die Beziehung $Fr \approx c / [2 \cdot F \cdot \sin(inc)]$ verifizieren, wobei c die Ausbreitungsgeschwindigkeit der Funkwellen ist, F die Schwadbreite ist, Fr die Wiederholfrequenz ist und *inc* der Einfall eines durch die Radarvorrichtung gesendeten Signals ist,

**dadurch gekennzeichnet, dass**:

- die Wiederholfrequenz (Fr) zwischen ein paar Dutzend und ein paar hundert Hertz liegt, so dass sich eine Schwadbreite (F) ergibt, die im Wesentlichen gleich 1000 km ist, wobei die Wiederholfrequenz (Fr) erheblich niedriger ist als das Dopplerband der von der Radarvorrichtung empfangenen Echos, wobei die Doppler-Frequenz im Wesentlichen gleich 1500 Hz ist;

- und dadurch, dass sie Mittel zum Integrieren mehrerer Bilder derselben Zone auf kohärente Weise in Kombination mit Mitteln umfasst, um die erhaltenen Bilder nach der Detektion auf nichtkohärente Weise zu integrieren;

- wobei nach der Detektion eine solche Zahl von integrierten Bildern vorliegt, dass das Verhältnis zwischen der von dem Ziel reflektierten Leistungsdichte (PZiel) und der Summe aus der von unerwünschten Echos reflektierten Leistung (Pclutter) und thermischem Rauschen (Bthermisch) größer als eine Detektierbarkeitsschwelle (Sd) ist,

so dass die Wahrscheinlichkeit der Detektion von metrischen und dekametrischen Zielen in der Zone verbessert wird.

2. Vorrichtung nach dem vorherigen Anspruch, **dadurch gekennzeichnet, dass** die Raumauflösung im Wesentlichen gleich einigen Dutzend Metern Distanz und einigen Dutzend Metern Azimut ist.

3. Vorrichtung nach einem der vorherigen Ansprüche, die eine Empfangsantenne umfasst, **dadurch gekennzeichnet, dass** die Empfangsantenne eine Empfangsstrahlenapertur aufweist, die in ihrer Elevation relativ zur Apertur des Strahls beim Senden sehr eng ist, mit einem Verhältnis, das gleich oder größer als etwa fünf ist, sowie Mittel zum dynamischen Orientieren der Empfangsstrahlenapertur in Richtung auf die Ankunft des Echos, um die Empfangsverstärkung der Radarvorrichtung mit synthetischer Apertur gemäß der Erfindung zu vergrößern.

4. Vorrichtung nach Anspruch 3, **dadurch gekennzeichnet, dass** die Mittel zum dynamischen Orientieren der Empfangsstrahlenapertur Mittel zum elektronischen Abtasten beim Empfang umfasst, so dass die Ankunftsrichtung des Echos bestimmt werden kann.

5. Satellit, **dadurch gekennzeichnet, dass** er eine Vorrichtung nach einem der vorherigen Ansprüche umfasst.


**Claims**

1. A radar device with a partial synthetic aperture designed for maritime surveillance and designed to be placed on board a carrier moving at very high altitude (S), and having:

   - a decametric space resolution, a swath width (F) and a repetition frequency (Fr) such that said swath width (F) and said repetition frequency (Fr) confirm the relation $Fr \approx c /[2 \cdot F \cdot \sin(inc)]$, where c is the propagation speed of the radio waves, F is the swath width, Fr is the repetition frequency and *inc* is the incidence of a signal transmitted by said radar device,

   **characterised in that**:

   - said repetition frequency (Fr) is between a few tens of hertz and a few hundreds of hertz, resulting in a swath width (F) that is substantially equal to 1,000 km, said repetition frequency (Fr) being much lower than the Doppler band of the echoes received by said radar device, said Doppler frequency being substantially equal to 1,500 Hz;
   - and **in that** it comprises means for integrating a plurality of images of the same zone in a coherent manner combined with means for integrating, after detection, the obtained images in a non-coherent manner;
   - the number of images integrated after detection being such that the ratio between the power density reflected by the target (Ptarget) and the sum of the power reflected by unwanted echoes (Pclutter) and the thermal noise (Bthermal) is greater than a detectability threshold (Sd)

   such that the likelihood of detecting metric and decametric sized targets in said zone is improved.

2. The device according to the preceding claim, **characterised in that** the space resolution is substantially equal to a few tens of metres in distance by a few tens of metres in azimuth.

3. The device according to any one of the preceding claims, comprising a reception antenna, **characterised in that** said reception antenna comprises a reception beam aperture that is very narrow in elevation relative to the aperture of the beam on transmission, with a ratio that is greater than or equal to approximately five, as well as means for dynamic orientation of said reception beam aperture toward the direction of arrival of the echo so as to increase the reception gain of said synthetic aperture radar device according to the invention.

4. The device according to claim 3, **characterised in that** said means for dynamic orientation of the reception beam aperture comprise means for electronic scanning on reception allowing the direction of arrival of the echo to be determined.

5. A satellite, **characterised in that** it comprises a device according to any one of the preceding claims.

FIG. 1

## RÉFÉRENCES CITÉES DANS LA DESCRIPTION

**Documents brevets cités dans la description**

- WO 2007057707 A1

**Littérature non-brevet citée dans la description**

- **FREEMAN et al.** The Myth of the Minimum SAR Antenna Area Constraint. *IEEE Transactions on geoscience and remote sensing*